# EUROPEAN PATENT APPLICATION

(11) **EP 3 660 072 A1**
(43) Date of publication of application: **03.06.2020**
(21) Application number: 18209370.8
(22) Date of filing: 30.11.2018
(51) Int. Cl.: C08G 63/66, C08G 63/668, C08G 63/672, C08G 18/42, C09J 167/02, C09J 175/04, C09J 175/06

(54) **POLYESTER POLYOL BASED ON RENEWABLE RAW MATERIALS**

(71) Applicant: Henkel AG & Co. KGaA, 40589 Düsseldorf (DE)
(72) Inventor: Meckel-Jonas, Claudia, 40597 Düsseldorf (DE); Hemery, Therese, 40591 Düsseldorf (DE); Blodau, Marcel, 47807 Krefeld (DE); Bala, Katja, 47877 Willich (DE); Yagüe-Marron, Alex, 08013 Barcelona (ES)

(57) **Abstract**

The present invention relates to a polyester polyol based on renewable raw materials and to an adhesive for heavy-duty packaging comprising the polyester polyol.

## Description

The present invention relates to a polyester polyol based on renewable raw materials and to an adhesive for heavy-duty packaging comprising the polyester polyol.

In addition to needing to withstand high chemical and thermal stresses, certain adhesives, in particular those that are used for producing food packaging, also need to meet a range of regionally different food law requirements, which are specified, for example, by the US Food and Drug Administration (FDA) or are defined in the European plastics regulation EC10/2011.

In addition, the need of consumers and manufacturers for environmentally friendly packaging solutions which make an important contribution to meeting sustainability goals, usually with the buzzword "carbon footprint," is increasing. Here, there is a focus in particular on the use of raw materials which can be obtained from renewable sources. However, in comparison with their petrochemical counterpart, said materials have the drawback that mechanical specifications that have up till now been considered current cannot be achieved and that the established production process needs to be adapted owing to the different chemical behavior, and this is generally associated with a great deal of time and money being spent.

This has an impact especially in fields in which the packaging is subjected to heavy stresses. In particular in the field of food packaging, where not only health and hygiene standards need to be met but also high mechanical and chemical stresses occur, the expectations of the manufacturer and consumer are unlikely to be met using conventional adhesives based on renewable raw materials. In addition to the requirements of the different packaging materials such as plastics or metal, it is in particular also the contents that pose a challenge for the packaging manufacturer. In addition to the mechanical stresses caused by the weight of the packaged food, there are generally adverse effects caused by the food itself or by the ingredients thereof. The production of stable packaging in the field of animal feed, in particular liquid feed, is thus associated with considerable difficulties owing to the aggressiveness of the ingredients and the amounts to be packaged, for example.

US 5,096,980 describes polyurethane adhesive compositions which result in excellent adhesive behavior with respect to the contents to be packaged or to be wrapped and with respect to boiling water. The claimed composition comprises an organic polyisocyanate, a polyol, 0.01 to 10 wt.% of an oxyacid of phosphorus or of a derivative of same and 9.91 to 20 wt.% of a carboxylic acid or of an anhydride of same and 0.1 to 50 wt.% of an epoxy resin.

EP 1 983 011 relates to a method for preparing a laminating adhesive for shrink-wrap products, in which method a mixture is prepared that comprises 50 to 98 wt.% of a hydroxy-terminal polyester having a hydroxy number of from 50 to 350 and a hydroxyl functionality of from 2 to 3, 1 to 30 wt.% of an epoxy resin having an epoxy equivalent weight of 500 to 4000, and 1 to 20 wt.% of an organic alkoxysilane containing C₁-C₄ alkoxy groups, and this mixture is heated at a temperature of from 100 to 150 °C until the epoxy resin is substantially completely dissolved. The C₁-C₄ alcohol is then evaporated at a pressure of less than 13 kPa to a C₁-C₄ residual alcohol content of less than 0.4 wt.% for preparing a first component, and a second component is provided that contains a multifunctional isocyanate having an isocyanate functionality of from 1.8 to 4, the second component being in a molar ratio of the NCO/OH groups relative to the first component of 0.9:1 to 3:1. In view of the existing food law provisions, the use of epoxy resins in packaging intended for food should be seen in a critical light, since at least some of these compounds entail health risks.

WO 2006/026670 discloses adhesives for high-temperature laminates which comprise at least one polyester urethane having at least two isocyanate groups, the polyester urethane being obtained by reaction of one or more hydroxy-functional polyesters 1 with aliphatic diisocyanates and reaction with one or more hydroxy-functional polyesters 2, polyester 1 having a number-average molecular weight Mₙ in the range of from 3000 to 7000 g/mol, polyester 2 having a number-average molecular weight Mₙ in the range of from 700 to 2000 g/mol and the aliphatic diisocyanates having a number-average molecular weight Mₙ of from 110 to 300 g/mol, and one or more branched hydroxy-functional polyesters having a number-average molecular weight Mₙ in the range of from 1000 to 3500 g/mol.

The conventional adhesives used in the field of food packaging have the drawback that only a very small proportion can be obtained, if any, from renewable raw materials. The problem addressed by the present invention is therefore that of providing sustainable packaging solutions which have a high proportion of renewable raw materials and the mechanical properties of which are at least comparable to those of conventional systems.

It has surprisingly been found that this problem is solved by providing a polyester polyol based on renewable raw materials which is obtained from a reaction mixture comprising isosorbide.

The present invention therefore firstly relates to a polyester polyol based on renewable raw materials which is obtained from a reaction mixture comprising isosorbide, at least one dicarboxylic acid and at least one triglyceride selected from or derived from esters of glycerol.

Isosorbide is a bicyclic compound of the molecular formula C₆H₁₀O₄ from the group of diols and oxygen-containing heterocycles in which furan rings are fused. Isosorbide can be prepared, for example, from D-sorbitol, which is obtained by catalytically hydrogenating D-glucose, which in turn is produced by hydrolysis of starch. Isosorbide is registered under the CAS number [652-67-5].

It has surprisingly been shown that, by the combination of the components contained in the reaction mixture, hydrophobic, liquid polyester polyols are obtained which are free of what are known as migratable cycles. These cyclic esters have the potential to migrate in food and can be dangerous for consumers depending on the composition.

The reaction mixture from which the polyester polyol according to the invention is obtained comprises the at least one dicarboxylic acid preferably in an amount of from 5 to 40 wt.%, preferably 10 to 25 wt.%, based on the total weight of the monomer units contained in the reaction mixture.

The reaction mixture further preferably comprises isosorbide in an amount of from 5 to 50 wt.%, preferably 15 to 40 wt.%, based on the total weight of the monomer units contained in the reaction mixture.

In a further preferred embodiment, the amount of triglyceride contained in the reaction mixture is 10 to 90 wt.%, preferably 50 to 70 wt.%, based on the total weight of the monomer units contained in the reaction mixture.

In a preferred embodiment, the reaction mixture from which the polyester polyol according to the invention is obtained comprises the following monomer units:
i) 5 to 40 wt.%, preferably 10 to 25 wt.%, of at least one dicarboxylic acid;
ii) 5 to 50 wt.%, preferably 15 to 40 wt.%, isosorbide; and
iii) 10 to 90 wt.%, preferably 50 to 70 wt.%, of at least one triglyceride selected from or derived from esters of glycerol, in each case based on the total weight of the monomer units.

The components of the reaction mixture can be selected such that they are derived from renewable raw materials or are prepared from such materials. In this way, it is possible to prepare a polyester polyol according to the present invention of which approximately 100% can be obtained from renewable raw material sources.

In this case, the at least one dicarboxylic acid is preferably selected from the group consisting of aliphatic dicarboxylic acids having 4 to 24 carbon atoms, aromatic dicarboxylic acids, dimer fatty acids and mixtures and derivatives thereof. The at least one dicarboxylic acid is particularly preferably selected from the group consisting of succinic acid, adipic acid, azelaic acid, sebacic acid, dodecanedioic acid, tetradecandioic acid, phthalic acid, isophthalic acid, terephthalic acid, furandicarboxylic acid and mixtures thereof. The at least one dicarboxylic acid is in particular selected from the group consisting of succinic acid, adipic acid, and isophthalic acid.

The at least one trigliceride used in the reaction mixture, which triglyceride is selected or derived from esters of glycerol, is preferably selected from the group consisting of soybean oil, linseed oil, sunflower oil, safflower oil, rapeseed oil, physic nut oil, light walnut oil, grapeseed oil, canola oil, corn oil, cashew kernel oil, fish oil, castor oil, tall oil, coconut oil, palm oil, palm kernel oil, olive oil and mixtures and derivatives of said compounds. In a particularly preferred embodiment, the tryglyceride is selected from the group consisting of castor oil, soybean oil and derivatives of said compounds.

The polyester polyol according to the invention is characterized by its advantageous hydrophobic properties. An embodiment is therefore preferred in which the polyester polyol according to the invention has a hydroxyl number (OH number) of from 10 to 200 mg KOH/g, preferably 30 to 150 mg KOH/g. Within the meaning of the present invention, the hydroxyl number is a measure for the content of hydroxyl groups in the polyester polyol and is given in milligrams as the amount of potassium hydroxide which is equivalent to the amount of acetic acid bound when one gram of substance is acetylated.

In a further preferred embodiment, the polyester polyol according to the invention is characterized by an acid number of from 0 to 10 mg KOH/g, preferably 0 to 5 mg KOH/g. Just like the hydroxyl number, the acid number can be determined experimentally by means of potentiometric titration or by means of acid-base titration.

The polyester polyol according to the invention is suitable in particular for use in adhesives, especially for adhesives which are used to produce food packaging. The present invention therefore further relates to the use of the polyester polyol according to the invention in an adhesive composition, in particular in a polyurethane adhesive composition.

It has surprisingly been found that adhesive compositions which contain the polyester polyol according to the invention are characterized by a very good stability with respect to aggressive filling material, high adhesion values and a good storage stability. The present invention therefore further relates to an adhesive composition comprising:
a) at least one polyester polyol according to the present invention; and
b) at least one NCO-terminated compound.

In a preferred embodiment, the adhesive composition according to the invention is characterized in that the ratio of NCO:OH is 1.0:1 to 5.0:1, preferably 1.3:1 to 3.0:1. It has surprisingly been found that an NCO:OH ratio in the claimed range yields an adhesive composition which can be provided both as a one-component system and as a two-component system.

The adhesive composition according to the invention preferably further comprises an adhesion promoter, the adhesion promoter preferably being contained in an amount of up to 20 wt.%, particularly preferably 1 to 10 wt.%, in each case based on the total weight of the solvent-free composition. The adhesion promoter is preferably selected from alkoxylated silanes and the organofuncitonal derivatives thereof. The adhesion promoter is particularly preferably selected from methoxylated and ethoxylated silanes and mixtures thereof. It has surprisingly been found that, by adding the selected adhesion promotors, an adhesive composition can be achieved which has an excellent adhesive bond also in the presence of exacting filling materials in food packaging.

There are no particular requirements for the NCO-terminated compounds contained in the adhesive composition according to the invention. The NCO-terminated compound is preferably also obtainable from renewable raw materials. The NCO-terminated compound is preferably a polyisocyanate. Polyisocyanates are aromatic, aliphatic or cycloaliphatic isocyanates. The polyisocyanate is preferably selected from the group consisting of 1,5-naphthylene diisocyanate, 2,4- or 4,4'-diphenylmethane diisocyanate (MDI) and mixtures of these isomers, hydrogenated MDI (H12MDI), xylylene diisocyanate (XDI), tetramethyl xylylene diisocyanate (TMXDI), di- and tetraalkylene diphenylmethane diisocyanate, 4,4'-dibenzyl diisocyanate, 1,3- or 1,4-phenylenediisocyanate, the isomers of toluylene diisocyanate (TDI), 1-methyl-2,4-diisocyanato-cyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), phosporus- or halogen-containing diisocyanates, tetramethoxybutane-1,4-diisocyanate, butane-1,4-diisocyanate,hexane-1,6-diisocyanate (HDI), dicyclohexylmethane diisocyanate, cyclohexane-1,4-diisocyanate, ethylene diisocyanate, methylene triphenyl triisocyanate (MIT), 1,4-diisocyanatobutane, 1,12-diisocyanatododecane and dimer fatty acid diisocyanate. Polyfunctional isocyanates can also be used as are prepared by trimerization or oligomerization of diisocyanates or by reaction of diisocyanates with polyfunctional compounds containing hydroxyl or amino groups. Diisocyanates and the oligomers thereof are preferably used.

In a particularly preferred embodiment, the NCO-terminated compound is selected from the group consisting of xylylene diisocyanate, pentamethylene diisocyanate, hexamethylene diisocyanate, 1-isocyanatomethyl-3-isocyanato-1,5,5-trimethylcyclohexane (IPDI) and polymers and oligomers of said compounds.

The adhesive composition according to the invention can be used both as a one-component (1K) system and as a two-component (2K) system. In a preferred embodiment, the adhesive composition according to the invention is therefore a 2K system. In an alternatively preferred embodiment, the adhesive composition according to the invention is a 1K system.

The adhesive composition according to the invention is suitable in particular for adhesively bonding film-like substrates in the field of food packaging. An embodiment is therefore preferred in which the adhesive composition according to the invention is a laminating adhesive. In this case, the adhesive composition may contain solvent or may be solvent-free or may be present in the form of a dispersion.

The present invention further relates to a method for bonding substrates using the adhesive composition according to the invention. In this case, the method according to the invention comprises the following steps:
i) applying an adhesive composition according to the present invention to at least one substrate;
ii) contacting the coated substrate with an additional substrate; and
iii) curing the applied adhesive composition,
the adhesive composition preferably being cured at a temperature of from 40 to 85 °C, preferably 55 to 65 °C.

In a preferred embodiment, the substrates are contacted under additional pressure.

The adhesive composition according to the invention is particularly suitable for bonding flexible substrates. Within the scope of the present invention, flexible substrates are understood to be those which have a certain elasticity and pliability, for example films, laminae or sheets. In a preferred embodiment, the substrates are film-like substrates, in particular plastics films or metal foils. In an alternative embodiment, substrates are plastics or metal sheets, in particular aluminum sheets.

Bonding flexible substrates is part of the routine activity of a person skilled in the art and has long been an established method. However, bonding thick flexible substrates, in particular thick metal foils such as aluminum foils, continues to be challenging. However, it is precisely materials of this kind which are used in the field of food packaging. Within the scope of the present invention, it has surprisingly been found that the method according to the invention in combination with the adhesive composition according to the invention is suitable in particular for bonding thick metal foils, as used for example in the production of liquid animal feed packaging. An embodiment is therefore preferred in which at least one of the substrates is an aluminum foil, preferably having a thickness of from 5 to 240 µm, particularly preferably 40 to 180 µm.

The present invention also relates to a composite system which comprises the adhesive composition according to the invention or can be obtained by the method according to the invention.

The composite system according to the invention is characterized by an excellent adhesive bond after curing of the adhesive composition and also after sterilization. An embodiment is therefore preferred in which the composite system has an adhesive bond after 7 days and a sterilization at 131 °C for 45 minutes of from 3 to 19 N/15 mm, preferably 5 to 15 N/15 mm, particularly preferably 5 to 10 N/15 mm.

The composite system is preferably an item of packaging, particularly an item of food packaging, in particular an item of packaging for animal feed. It has surprisingly been found that the composite system according to the invention can also be used as packaging for liquid animal feed, which, given the aggressive contents, places particular demands on the systems used. The present invention further relates to the use of the adhesive composition according to the invention for producing packaging, preferably food packaging, in particular packaging for animal feed, particularly preferably liquid animal feed.

The present invention further relates to the use of an adhesive composition according to the invention for bonding film-like substrates. At least one of the substrates to be adhesively bonded is preferably an aluminum foil, preferably having a thickness of from 5 to 240 µm, particularly preferably 40 to 180 µm.

The present invention is described in more detail with reference to the following examples, which are not to be understood to be limiting of the inventive concept.

### Examples

Examples of the polyester polyols according to the invention were prepared from reaction mixtures comprising succinic acid, isosorbide and castor oil, the content of isosorbide in the polyester polyol PES 1 according to the invention being 10 wt.%, while for the polyester polyol PES 2 according to the invention 25 wt.% isosorbide was used.

The polyester polyols according to the invention were each reacted together with an NCO-terminated compound to form a laminating adhesive. For this purpose, a constant film-forming addition ratio NCO/OH of 2.32 was selected. The reactive adhesive mixture obtained was diluted with ethyl acetate to a solids content of 33.3%.

The substrates to be coated were formatted to DIN A4 size. A carrier foil of aluminum having a thickness of 90 µm was coated with 6 g/m² of the reactive adhesive mixture and placed on a pre-composite. The carrier foil coated in this manner was then dried in a drying cabinet for 2 minutes at 90 °C. The composites prepared in this manner were cured in the drying cabinet at 60 °C under pressure (weight 8 kg) between metal plates.

The laminates obtained were tested for the practicability thereof. For this purpose, said laminates were subjected to sterilization at 131 °C and for 45 minutes in the presence of a filling material.

The results are set out in Table 1. A mixture of IPDI trimer, IPDI and an ethoxy silane (NCO 1) was used as the NCO-terminated compound. A commercially available polydiethylene glycol adipate isophthalate (CAS [35164-40-0]) was used as a comparison (PES-comp.). A food substance "triple 1" consisting of equal parts of 5% for each of acetic acid, ketchup and olive oil was used as the filling material 1.

**Table 1**

| Example | PES | NCO | VH1¹⁾ [N/15 mm] | VH2²⁾ [N/15 mm] | VH3³⁾ [N/15 mm] | VH4⁴⁾ [N/15 mm] |
|---|---|---|---|---|---|---|
| Ex. 1 | 1 | NCO 1 | 3.8 | 4.3 | 3.3 | 1.0 |
| Ex. 2 | 2 | NCO 1 | 9.5 | 8.6 | 8.8 | 9.0 |
| Comp. 1 | PES-comp. | NCO 1 | 5.0 | 3.2 | 1.0 | 0.6 |

| | | | | | | |
|---|---|---|---|---|---|---|
| 1) VH1: adhesive bond after bag sterilization 131 °C, 45 minutes, filling material 1 2) VH2: adhesive bond after bag sterilization 131 °C, 45 minutes, filling material 1, storage 1 week at 40 °C 3) VH3: adhesive bond after bag sterilization 131 °C, 45 minutes, filling material 1, storage 3 weeks at 40 °C 4) VH4: adhesive bond after bag sterilization 131 °C, 45 minutes, filling material 1, storage 5 weeks at 40 °C | | | | | | |

As can be seen from Table 2, the system according to the invention also has a very good adhesive bond after being stored for 5 weeks in the presence of an aggressive filling material.

The polyester polyols according to the invention were further reacted with a mixture of IPDI trimer and a methoxy alkyl silane (NCO 2) as the NCO-terminated compound. A cat food simulant consisting of 0.1 g oleic acid, 100 g water and 9 g corn starch was used as filling material 2 for the bag sterilization. The results are set out in Table 2:

**Table 2**

| Example | PES | NCO | VH5⁵⁾ | VH6⁶⁾ | VH7⁷⁾ |
|---|---|---|---|---|---|
| Ex. 3 | 2 | NCO 2 | 12.0 | 12.0 | 10.0 |
| Comp. 2 | PES-comp. | NCO 2 | 3.2 | 3.8 | 0.2 |

| | | | | | |
|---|---|---|---|---|---|
| 5) VH5: adhesive bond after 7 days 6) VH6: adhesive bond after 7 days and bag sterilization at 131 °C for 45 minutes 7) VH7: adhesive bond after bag sterilization at 131 °C for 45 minutes, filling material 2 | | | | | |

As can be seen in Table 3, the adhesive bond of the adhesive composition according to the invention is hardly affected even in the presence of an aggressive filling material such as cat food simulant and after sterilization.

In order to determine the cycles of the polyester polyol PES 2 according to the invention, 4,4'-MDI (NCO/OH = 1.43) was added to samples thereof, and said samples were mixed and poured out onto teflon paper. The reaction mixture was cured for 14 days at ambient atmosphere and the films obtained were further processed and analyzed using GC-MS as follows.

The samples obtained were weighed in headspace vials and mixed with 99.8% ethanol. The containers were then tightly sealed and the samples were extracted for 2 hours at 70 °C. 1 ml was then taken from each of the extracts, mixed with an internal standard (naphthalene-D8) and measured using GC-MS. 1 g substance was extracted per sample. The identification was carried out using manual spectra interpretation. The qualification was carried out with respect to naphthalene-D8 with a resonance factor 1 (RF = 1). No cycles were detected.

## Claims

1. A polyester polyol based on renewable raw materials, **characterized in that** the polyester polyol is obtained from a reaction mixture comprising isosorbide, at least one dicarboxylic acid and at least one triglyceride selected from or derived from esters of glycerol.

2. The polyester polyol according to claim 1, **characterized in that** the reaction mixture comprises the following monomer units:
i) 5 to 40 wt.%, preferably 10 to 25 wt.%, of at least one dicarboxylic acid;
ii) 5 to 50 wt.%, preferably 15 to 40 wt.%, isosorbide; and
iii) 10 to 90 wt.%, preferably 50 to 70 wt.%, of at least one triglyceride selected from or derived from esters of glycerol,
in each case based on the total weight of the monomer units.

3. The polyester polyol according to at least one of the preceding claims, **characterized in that** the dicarboxylic acid is selected from the group consisting of aliphatic dicarboxylic acids having 4 to 24 carbon atoms, aromatic dicarboxylic acids, dimer fatty acids and mixtures and derivatives thereof.

4. The polyester polyol according to at least one of the preceding claims, **characterized in that** the polyester polyol has a hydroxyl number (OH number) of from 10 to 200 mg KOH/g, preferably 60 to 150 mg/KOH/g.

5. An adhesive composition comprising:
a) at least one polyester polyol according to at least one of claims 1 to 4; and
b) at least one NCO-terminated compound.

6. The adhesive composition according to claim 5, **characterized in that** the ratio of NCO:OH is 1.0:1 to 5.0:1, preferably 1.3:1 to 3.0:1.

7. The adhesive composition according to at least one of claims 5 and 6, **characterized in that** the adhesive further comprises an adhesion promoter, preferably in an amount of up to 20 wt.%, preferably 1 to 10 wt.%, in each case based on the total weight of the solvent-free adhesive.

8. A method for bonding at least two substrates, comprising the following steps:
i) applying an adhesive composition according to at least one of claims 5 to 7 to at least one substrate;
ii) contacting the coated substrate with an additional substrate; and
iii) curing the adhesive composition,
**characterized in that** the adhesive is cured at a temperature of from 40 to 85 °C, preferably 55 to 65 °C.

9. The method according to claim 8, **characterized in that** at least one of the substrates is an aluminum foil, preferably having a thickness of from 5 to 240 µm, particularly preferably 40 to 180 µm.

10. A composite system comprising an adhesive composition according to at least one of claims 5 to 7 or obtainable by a method according to at least one of claims 8 or 9.

11. The composite system according to claim 10, **characterized in that** the composite system is an item of packaging, preferably an item of food packaging, particularly preferably an item of packaging for animal feed.

12. The use of an adhesive according to at least one of claims 5 to 7 for producing packaging, preferably food packaging, in particular packaging for animal feed.

13. The use of an adhesive according to at least one of claims 5 to 7 for bonding film-like substrates.

14. The use according to claim 13, **characterized in that** at least one of the substrates to be adhesively bonded is an aluminum foil, preferably having a thickness of from 5 to 240 µm, particularly preferably 40 to 180 µm.

15. The use of a polyester polyol according to at least one of claims 1 to 4 for preparing an adhesive, in particular a polyurethane adhesive.
